# EUROPÄISCHE PATENTSCHRIFT

(11) **EP 2 330 062 B1**
(45) Veröffentlichungstag und Bekanntmachung des Hinweises auf die Patenterteilung: **17.10.2012**
(21) Anmeldenummer: 10015082.0
(22) Anmeldetag: 29.11.2010
(51) Int. Cl.: B65G 25/06

(54) **Schubboden- Transportvorrichtung**
Push floor transport device
Dispositif de transport à fond mouvant

(30) Priorität: 04.12.2009 DE 102009056821
(43) Veröffentlichungstag der Anmeldung: 08.06.2011
(73) Patentinhaber: Walkliner GmbH, 88299 Leutkirch/ Allgäu (DE)
(72) Erfinder: Lahme, Pierre, 87471 Durach (DE); Maischberger, Friedrich, 88299 Leutkirch (DE)
(74) Vertreter: Otten, Herbert

(56) Entgegenhaltungen:
- EP-A1- 0 727 369
- DE-U1- 9 209 116
- US-B1- 6 763 933

## Beschreibung

Die Erfindung bezieht sich auf eine Schubboden-Transportvorrichtung für den Transport von unterschiedlichem Transportgut nach dem Oberbegriff des Patentanspruchs 1.

### Stand der Technik

Schubboden-Transportvorrichtungen sind in einer Vielzahl von unterschiedlichen Ausführungsformen bekannt. Eine Ausführungsform ist der Pendelbodenförderer mit nebeneinander angeordneten Pendelbalken.

Aus der Druckschrift DE 92 09 116 U1 ist ein Pandelbodenförderer für den Transport von Stück- und Schüttgütern bekannt geworden, welcher im Wesentlichen parallel zueinander angeordnete und horizontal in Richtung ihrer Längsachse relativ zueinander bewegbare Pendelbalken umfasst und Mittel zur labyrinthartigen Spaltabdichtung zwischen den jeweils benachbarten Pendelbalken gegen Materialdurchtritt zeigt, wobei der Pendelbalken einen seitlich verbreiternden, die benachbarte Rinne überdeckenden Randstreifen mit einem nach unten gerichteten Vorsprung aufweist. Dieser Vorsprung greift in eine seitlich an einem benachbarten Pendelbalken angeordnete und nach oben offene Führungsrinne ein, wobei der überragende Randstreifen eine Abdichtung ausbildet.

Nachteilig ist, dass der Führungsbereich zwischen den Pendelbalken lediglich durch den überdeckenden Randstreifen gegen einen unerwünschten Materialeintritt von beispielsweise losem Schuttgut abgedichtet ist. Die vorzugsweise aus einem Leichtmetall, wie zum Beispiel Aluminium, hergestellten Profilbalken bilden mit ihren starren Profilkanten meist eine nur unzulängliche Abdichtung aus. Dadurch kann zwischen den Profilkanten ein Materialeintritt erfolgen, der zu einem erhöhten Materialabrieb an den Dichtflächen und zu einem unerwünschten Materialeintritt in den darunter angeordneten Führungsbereich führen kann. Ein "Verklemmen" von Pendelbalken ist möglich.

Aus dem Dokument US 6,763,933 B1 ist ein Schubboden gemäß dem Oberbegriff des Anspruchs 1 bekannt, welcher aus gegeneinander verschiebbaren, zueinander durch eine Dichtung abgedichteten Planken besteht. Die Dichtung ist dabei einseitig in einem Plankenabschnitt einer ersten Planke aufgenommen und gleitet entlang eines ebenen zweiten Plankenabschnitts einer zweiten Planke.

Aus dem Dokument EP 0 727 369 A1 ist ein Schubboden bekannt, welcher über eine, in einer Nut geführten Dichtlippe zwei nebeneinander laufende Planken gegeneinander abdichtet. Die Dichtlippe ist dabei als entlang der Planken verlaufender Streifen ausgebildet.

Aus diesem Grunde hat sich die Erfindung die Aufgabe gestellt, eine Schubboden-Transportvorrichtung für den Transport von unterschiedlichem Transportgut derart weiterzubilden, dass eine störungsfreie und Verschleiß vermindernde Funktion verbessert wird.

Zur Lösung der Aufgabe ist die Erfindung durch die Merkmale des Patentanspruchs 1 gekennzeichnet.

Vorteilhafte Erweiterungen der Erfindung sind in den abhängigen Ansprüchen beschrieben.

### Offenbarung der Erfindung

Die Erfindung geht von einer Schubboden-Transportvorrichtung für den Transport von unterschiedlichem Transportgut, beispielsweise von Paletten oder von losem Schüttgut aus, umfassend mindestens ein Trägerprofil zur ortsfesten Befestigung der Transportvorrichtung auf einem Untergrund, einer aus einzelnen Planken gebildete Transportebene zur Aufnahme und zum Transport des Transportgutes und mindestens ein ortsfest auf dem Trägerprofil befestigtes Dichtungsprofil zur Abdichtung der Transportebene gegenüber dem Untergrund, wobei mit jeder Planke separat oder mit Gruppen von Planken mittels eines Antriebes ein Hub in Längsrichtung ausführbar ist, und wobei jede Planke einen Profilquerschnitt mit einem oberen, im Wesentlichen ebenen Abschnitt und einem unterem, gegenüber diesem versetzen, im Wesentlichen U-förmigen Abschnitt aufweist.

Der im Wesentlichen U-förmige Abschnitt ist einstückig an dem ebenen Abschnitt der Planke angeformt, wodurch eine Abdichtung der Führungsbereiche zwischen zwei Planken seitlich erfolgen kann. Dadurch kann der U-förmige Abschnitt zusätzlich mit Transportgut, beispielsweise mit losem Schüttgut befüllt sein. Der im Wesentlichen ebene Abschnitt und im Wesentlichen U-förmige Abschnitt der erfindungsgemäßen Planke bilden eine einstückige Transportoberfläche, die ein unerwünschtes Durchtreten von Transportgut in darunter liegende Führungsbereiche vermeidet.

Der Kern der Erfindung liegt darin, dass dass der obere Abschnitt der Planke an seinem dem U-förmigen Abschnitt abgewandten Ende einen C-förmigen Fortsatz und der U-förmige Abschnitt an seinem Ende einen in Richtung der Transportebene gerichteten Schenkel umfasst. Die Verbindungsstelle von zwei nebeneinander angeordneter Planken ist aufgrund der Profilform seitlich angeordnet. Die Verbindungsstelle ist mittels einer entsprechenden Dichtung somit nur seitlich abzudichten.

Gemäß der Erfindung ist vorgesehen, dass der C-förmige Fortsatz einer ersten Planke und der in Richtung der Transportebene gerichtete Schenkel einer zweiten Flanke in das Dichtungsprofil, vorzugsweise in Form einer Labyrinthdichtung zumindest teilweise dichtend eingreifen. Die unterschiedliche Schenkellage des C-förmigen Fortsatzes bzw. des in Richtung der Transportebene gerichteten Schenkels des U-förmigen Abschnittes ermöglichen eine Profilform einer Profildichtung mit unterschiedlichen Verlaufsrichtungen. Eine Abdichtung in Form einer Labyrinthdichtung verbessert das Dichtungsverhalten zwischen zwei Planken gegen unerwünschten Eintritt von losen Schüttgut.

Überdies ist in einer weiteren Ausgestaltung der Erfindung vorgesehen, dass die Labyrinthdichtung im Dichtungsprofil den C-förmigen Fortsatz und den Schenkel der Planke formschlüssig umgreifen, wodurch eine Führung gebildet ist. Das formschlüssige, insbesondere U-förmige Umgreifen stabilisiert die Seiten- und Höhenlage der Planken, wodurch eine Funktionsstörung der Schubboden-Transportvorrichtung aufgrund eines so genannten "Verklemmen" der Planken insgesamt verringert werden kann.

In einer weiteren bevorzugten Ausgestaltung der Erfindung ist vorgesehen, dass das Dichtungsprofil einen oberen Gleitabschnitt zur teilweisen Auflage des C-förmigen Abschnitts und einen unteren Abschnitt zur teilweise Auflage des U-förmigen Abschnitts für zwei benachbarte Planken, einen Dicht- bzw. Führungsabschnitt zur Abdichtung und Führung des C-förmigen Fortsatzes und des am U-förmigen Abschnitts sich anschließenden Schenkels, mindestens einen, vorzugsweise zwei Klemmabschnitte zur Befestigung am Trägerprofil, und mindestens eine Nut zur Positionsfixierung am Trägerprofil umfasst. Das erfindungsgemäße Dichtungsprofil übernimmt unterschiedliche Funktionen, wie beispielsweise Auflage-, Führungs-, Klemm- bzw. Positionierungsfunktionen von Planken, wodurch zusätzliche Elemente zur Ausführung der vorbenannten Funktionen nicht erforderlich sind.

In einer überdies bevorzugten Ausgestaltung der Erfindung ist vorgesehen, dass das Dichtungsprofil einen lasttragenden Gleitabschnitt zur teilweisen Auflage für den ebenen Abschnitt der Planke aufweist. Der lasttragende Gleitabschnitt ist dazu ausgelegt, die Last des auf dem im Wesentlichen ebenen Abschnitt angeordneten Schüttgutes aufzunehmen, ohne die Führungs- bzw. Dicht- und Gleiteigenschaften nachfolgender Profilbereiche zu vermindern.

Gemäß der Erfindung ist vorgesehen, dass das Dichtungsprofil mit formschlüssig das Trägerprofil hintergreifenden Fügestrukturen ausgebildet ist. Die Fügestrukturen des Dichtungsprofils gewährleisten eine Lage- bzw. Positionsfixierung des Dichtungsprofils auf dem Trägerprofil. Dadurch können unerwünschte Undichtigkeiten oder Verschiebungen vermieden werden.

In einer weiteren Ausgestaltung ist es überdies bevorzugt, dass ein Dichtungsprofil dazu vorgesehen ist, zwei nebeneinander angeordnete Planken zu führen, abzudichten und gleitend zu lagern. Die Profilform des Dichtungsprofils mit Gleitabschnitten, Klemmabschnitten, Positionierungsabschnitten und Führungsabschnitten ist zur Verbindung von zwei nebeneinander angeordneten Planken ausgelegt. Es kann auf weitere Elemente zur Übernahme vorbenannter Funktionen verzichtet werden.

Überdies wird in einer weiteren Ausgestaltung der Erfindung bevorzugt, dass der im unteren bodennahen liegende Bereich des U-förmigen Abschnittes breiter als der Öffnungsbereich des U-förmigen Abschnittes ausgebildet ist. Der breitere Bodenbereich im U-förmigen Abschnitt wird durch einen Überstand des C-förmigen Fortsatzes im oberen Bereich der gebildeten Rinne erreicht. Auf diese Weise wird ein sich durch das Schüttgut im U-förmigen Abschnitt bildender Schacht begünstigt, welcher zusätzlich einen Schutz für das im Seitenbereich des U-förmigen Abschnitts angeordnete Dichtungsprofil bildet (Schachtbildung in Schüttgutrinnen). Zusätzlich vermeidet ein breiterer Bodenbereich eine so genannte Brückenbildung von losem Schüttgut.

In einer überdies bevorzugten Ausgestaltung ist vorgesehen, dass der laterale Flächenbereich des U-förmigen Abschnittes an der Transportebene kleiner als der Flächenbereich des ebenen Abschnitts ausgebildet ist. Dadurch wird die Hauptlast des auf den Planken angeordneten Schüttgutes von den ebenen oberen Abschnitten der Planken übernommen.

Überdies ist in einer weiteren Ausgestaltung der Erfindung vorgesehen, dass die Rinne mittels einer Rinnendichtung abdichtbar ist, wobei die Rinnendichtung einseitig im Seitenbereich der Rinne befestigbar ist. Die Abdichtung mittels einer Rinnendichtung gewährleistet beispielsweise ein hinderungsfreies Abfließen eines Schüttgutes. Des Weiteren kann eine in der Rinne angeordnete Rinnendichtung das Einfließen von zähem Schüttgut verhindern, welches lediglich mit einem hohen Aufwand, beispielsweise zur Reinigung aus der Rinne zu entfernen ist.

In einer weiteren bevorzugten Ausgestaltung der Erfindung ist vorgesehen, dass die Rinnen-Dichtung in Seitenbereichen von zwei benachbarten Planken einseitig befestigt und einseitig gleitend geführt ist. Die seitliche Befestigung der Rinnen-Dichtung verhindert ein unbeabsichtigtes Herauslösen der Rinnen-Dichtung aus der Rinne. Die gleitende Führung der Rinnen-Dichtung gewährleistet die Führung der Planken während der Schubbewegung.

Überdies ist in einer weiteren Ausgestaltung der Erfindung vorgesehen, dass die Rinnen-Dichtung als durchgehende, als unterbrochene und/oder als Öffnungen aufweisende Dichtung, beispielsweise mit Bohrungen und/oder Schlitzen ausgebildet ist. Die unterschiedlichen Ausführungen der Bohrungen bzw. Schlitze bilden beispielsweise ein unterschiedliches Fließverhalten von losem Schüttgut in die Rinne aus und kann dem jeweiligen Transportgut angepasst werden. Zudem ist eine Ableitung von Flüssigkeit, beispielsweise Tropfwasser beim Mülltransport ermöglicht.

Überdies ist in einer weiteren Ausgestaltung vorgesehen, dass die Vorrichtung Mittel zur Ein- und Ausleitung von Gas, Flüssigkeiten und Wärme vorzugsweise in den U-förmigen Abschnitt aufweist. In jede Rinne der Schubboden-Transportvorrichtung kann beispielsweise ein Trockengas, eine Flüssigkeit oder ein erwärmtes Gas eingeleitet werden, wobei das entsprechende Medium über die Bohrungen bzw. Schlitze der Rinnendichtung in das Transportgut eingeleitet werden kann. Dies hat den Vorteil, dass während des Transportes das Transportgut mittels der vorbenannten Medien aufbereitet, beispielsweise getrocknet werden kann.

Weitere Merkmale der Erfindung gehen aus der nachfolgenden Figurenbeschreibung und den Zeichnungen hervor.

Dabei zeigen:
- Fig. 1: eine Schnittdarstellung einer Schubboden-Transportvorrichtung;
- Fig. 2: eine Schnittdarstellung einer Schubboden-Transportvorrichtung mit einem darauf angeordneten Transportgut;
- Fig. 3: eine Schnittdarstellung einer Schubboden-Transportvorrichtung mit eingelegter Rinnen-Dichtung.

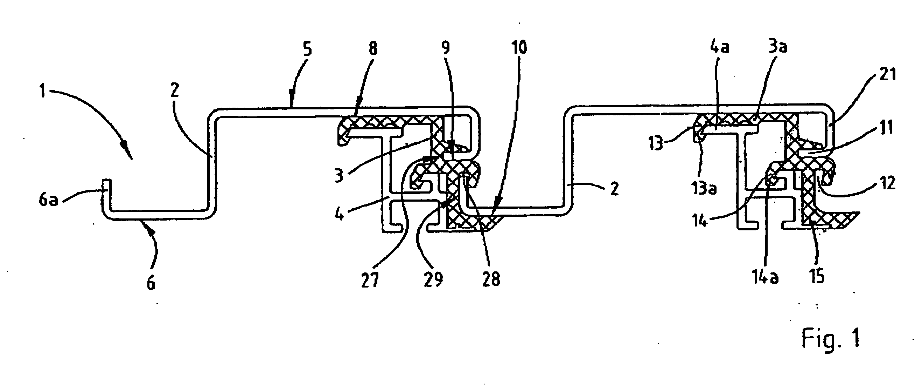

In Fig. 1 ist ein Ausschnitt einer Schubboden-Transportvorrichtung 1 gezeigt, welcher zwei nebeneinander angeordnete Planken 2 umfasst, die über ein Dichtungsprofil 3 mit einem Trägerprofil 4 verbunden sind. Die Planke 2 ist aus einem oberen, im Wesentlichen ebenen Abschnitt 5 und einem unterem, gegenüber diesem versetzten, im Wesentlichen U-förmigen Abschnitt 6 gebildet. Der ebene Abschnitt 5 weist an seinem abgewandten Ende einen C-förmigen Fortsatz 21 auf, welcher mit seinem freien Ende in das Dichtungsprofil 3 in horizontaler Richtung eingreift. Der U-förmige Abschnitt 6 der Planke 2 weist einen in Richtung der Transportebene gerichteten Schenkel auf, welcher in das Dichtungsprofil 3 unterhalb des C-förmigen Fortsatzes 21 in vertikaler Richtung eingreift.

Der ebene Abschnitt 5 und der U-förmige Abschnitt 6 sind zur Aufnahme eines Transportgutes 7 ausgebildet, wobei das Transportgut 7 mittels getakteten Schubbewegungen in Längsrichtung der nebeneinander angeordneten Planken ein- bzw. ausgetragen werden kann. Die Planken sind mittels elektrischen, pneumatischen und/oder hydraulischen Antrieben in Längsrichtung verschiebbar (hier nicht dargestellt).

Das Dichtungsprofil 3 umfasst in horizontaler und vertikaler Richtung verlaufende Profilabschnitte, welche unterschiedliche Funktionen übernehmen. Der im oberen Profilbereich horizontal verlaufende Profilabschnitt 3a ist zwischen der Unterseite des ebenen Abschnitts 5 und einem horizontal verlaufenden Schenkel 4a des Trägerprofils 4 angeordnet. Die zum ebenen Abschnitt 5 gerichtete Oberfläche des Profilabschnitts 3a bildet einen Gleitabschnitt 8 für den ebenen Abschnitt 5 während einer Schubbewegung der Planke 2 in Längsrichtung. An diesem Gleitabschnitt 8 fügt sich ein Dicht- und Führurgsabschnitt 27 für den Fortsatz 21 des C-förmigen Abschnitts der Planke 2. Das Dichtungsprofil 3 übernimmt im Dicht- und Führungsabschnitt 27 eine Dichtfunktion gegen unerwünschtes Austreten eines in der, aus dem U-förmigem Abschnitt 6 und dem C-förmigen Fortsatz 21 gebildeten Rinne angeordneten Transportguts 7. Darüber hinaus wird der Fortsatz 21 des C-förmigen Abschnittes aufgrund der U-förmig ausgebildeten Dichtungsnut bei der Schubbewegung der Planken 2 geführt.

Im Anschluss an den zuvor beschriebenen Dicht- und Führungsabschnitt 27 schließt sich ein weiterer Dicht- und Führungsabschnitt 28 an, welcher eine gleichartige Dicht- und Führungsfunktion für den darin eingreifenden Schenkel des U-förmigen Abschnitts 6 bildet.

Im Anschluss an den Dicht- und Führungsabschnitt 28 schließt sich ein weiterer L-förmiger Profilabschnitt 29 an, wobei die in die Transportebene gerichtete Oberfläche des L-förmigen Abschnitts als Gleitabschnitt 10 für die Unterseite des U-förmigen Abschnitts 6 ausgelegt ist. Das Dichtungsprofil 3 weist in Richtung des Trägerprofils 4 zwei in unterschiedlichen Ebenen angeordnete Klemmabschnitte 13 und 14 auf, welche an ihren Enden so genannte "Rastnasen" aufweisen, welche die entsprechenden Profilabschnitte des Trägerprofils 4 hintergreifen. Das Dichtungsprofil 3 wird mittels einer auf der Unterseite des Dichtungsprofils 3 angeordnete Nut 15 durch einen entsprechend ausgeformten Steg auf dem Trägerprofil 4 positioniert. Das zwischen zwei Planken 2 angeordnete Dichtungsprofil 3 bildet in den Auflagebereichen des U-förmigen und C-förmigen Abschnitts 6, 21 eine senkrecht nach unten gerichtete Verschleißrichtung aus, wobei die seitlichen Dichtungsflächen in den Dicht- und Führungsabschnitten 27, 28 entlastet sind. Aufgrund einer identischen Querschnittsform jeder Planke 2 ist zur Verbindung von zwei nebeneinander angeordneten Planken 2 lediglich ein einzelnes Dichtungsprofil 3 erforderlich, dass auf einem Trägerprofil 4 befestigt ist.

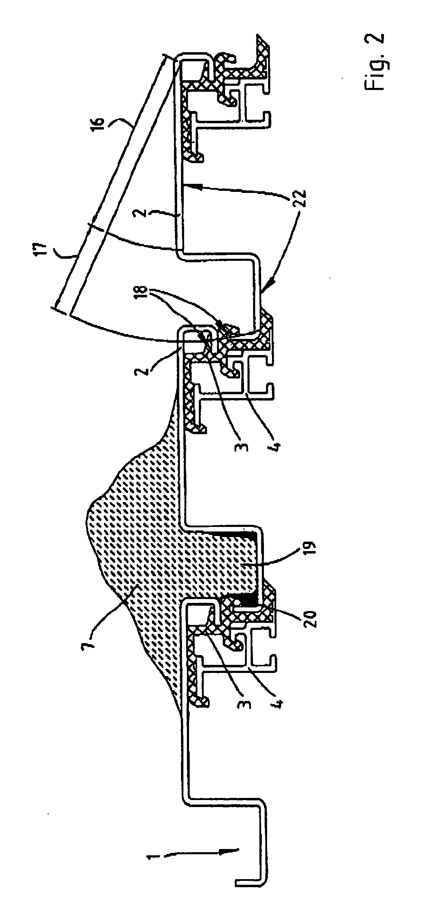

In Fig. 2 ist eine Schubboden-Transportvorrichtung 1 nach Fig. 1 gezeigt, umfassend drei nebeneinander angeordnete Planken 2, die je mittels eines Dichtungsprofils 3 auf einem darunter liegenden Trägerprofil 4 angeordnet sind. Auf der Oberfläche des ebenen Abschnitts 5 ist ein Transportgut 7 in Form von losem Schüttgut angeordnet.

Das Transportgut 7 füllt den Innenraum des U-förmigen Abschnitts 6. Weist das Transportgut 7 eine feinkörnige Struktur auf, kann an den seitlichen Wandungen im unteren, bodennahen Bereich des U-förmigen Abschnitts 6 eine so genannte Schachtbildung 20 entstehen, die einen zusätzlichen Schutz des Dichtungsprofils 3 bildet. Der Überstand des Fortsatzes 21 des C-förmigen Abschnittes bildet einen verbreiterten Innenraum im bodennahen Bereich des U-förmigen Abschnittes 6, wodurch eine so genannte Brückenbildung des Transportgutes vermieden wird. Ein ausreichender Austrag von Transportgut 7 aus dem U-förmigen Abschnitt 6 der Planke 2 kann gewährleistet werden.

Das Dichtungsprofil 3 bildet zusammen mit den eingreifenden Endabschnitten des Fortsatzes 21 am C-förmigen Abschnitt und des Schenkels am U-förmigen Abschnitt 6 eine Labyrinth-Dichtung 18, welche einen unerwünschten Austritt von Transportgut 7 über das Dichtungsprofil 3 vermeidet.

Die im Bodenbereich liegende Oberfläche des U-förmigen Abschnitts und die Oberfläche des ebenen Abschnitts 5 bilden einen vergrößerten Lastbereich für das Transportgut 7 aus, wodurch ein vermehrter Austrag von Transportgut 7 durch die in Längsrichtung der Planken 2 ausgeführten Schubbewegungen ausgeführt werden kann.

Das Dichtungsprofil 3 ermöglicht darüber hinaus einen Austrag von Abrieb des Dichtungsprofils 3 bzw. von Schüttgut im Bereich des Gleitabschnitts 8 und des L-förmigen Abschnitts 29 der Planke 2 während der Schubbewegungen der Planken 2.

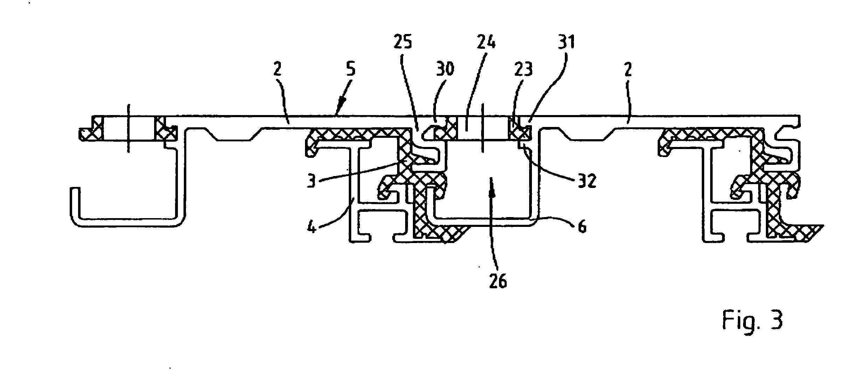

In Fig. 3 sind zwei nebeneinander angeordnete Planken 2 im Querschnitt gezeigt, wobei der C-förmige Abschnitt 5 einen nutartigen Profilabschnitt 25 aufweist. Der nutartige Profilabschnitt 25 weist einen Überstand 30 auf, welcher zusammen mit dem darunter angeordneten Schekel eine U-förnige Dichtungsnut bildet. In einer gegenüberliegenden Anordnung der U-förmigen Dichtungsnut weist eine angrenzende Planke 2 einen weiteren Überstand 31 auf, welcher zusammen mit einem darunter liegenden Quersteg 32 eine ebenfalls eine U-förmige Dichtungsnut ausbildet.

In die U-förmig ausgebildeten Dichtungsnuten kann eine Rinnen-Dichtung 23 eingelegt werden, welche zum Verschließen des darunter lieçenden Innenraums des U-förmigen Abschnittes 6 ausgelegt ist. Darüber hinaus kann die Rinnen-Dichtung 23 mit einer Medien-Durchführung 24 ausgebildet sein, welche zur Ein- oder Ausleitung von beispielsweise Gas, Flüssigkeiten oder Wärme in das Transportgut ausgebildet ist.

Die Rinnen-Dichtung 23 ist vorzugsweise in der U-förmigen Dichtungsnut des C-förmigen Abschnitts 25 befestigt und wird in der in Gegenüberstellung liegenden Dichtungsnut gleitend geführt.

Die erfindungsgemäße Schubboden-Transportvorrichtung 1 verringert den Energiebedarf zur Ausführung von Schubbewegungen einzelner Flanken 2 und verbessert die Standzeit des Schubbodens 1 aufgrund verminderter Abnutzung und geringerer Störungsanfälligkait,

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

### Bezugszeichenliste:

- 1: Schubboden-Transportvorrichtung
- 2: Planke
- 3: Dichtungsprofil
- 3a: oberer Profilabschnitt
- 4: Trägerprofil
- 4a: Schenkel, Trägerprofil
- 5: Ebener Abschnitt
- 6: U-förmiger Abschnitt
- 6a: Schenkel, U-förmiger Abschnitt
- 7: Transportgut
- 8: Gleitabschnitt, ebener Abschnitt
- 9: Gleitabschnitt, C-förmiger Abschnitt
- 10: Gleitabschnitt, U-förmiger Abschnitt
- 11: Gleit- und Führungsabschnitt, Fortsatz
- 12: Gleit- und Führungsabschnitt, U-förmiger Abschnitt
- 13: Klemmabschnitt,
- 13a: Fügestruktur
- 14: Klemmabschnitt,
- 14a: Fügestruktur
- 15: Nut, Dichtungsprofil
- 16: Erster Lastbereich
- 17: Zweiter Lastbereich
- 18: Labyrinth-Dichtung
- 19: Brückenbildung
- 20: Schachtbildung
- 21: Fortsatz, C-förmiger Abschnitt
- 22: Austritt Labyrinth
- 23: Rinnen-Dichtung
- 24: Medien-Durchführung
- 25: S-förmiger Profilabschnitt
- 26: Medien-Kammer
- 27: Dicht- und Führungsabschnitt
- 28: Dicht- und Führungsabschnitt
- 29: L-förmiger Profilabschnitt
- 30: Überstand
- 31: Überstand
- 32: Quersteg

## Patentansprüche

1. Schubboden-Transportvorrichtung (1) für den Transport von unterschiedlichem Transportgut (7), beispielsweise von Paletten oder von losem Schüttgut, umfassend
- mindestens ein Trägerprofil (4) zur ortsfesten Befestigung der Transportvorrichtung (1) auf einem Untergrund,
- eine aus einzelnen Planken (2) gebildete Transportebene zur Aufnahme und Transport des Transportgutes (7),
- mindestens ein ortsfest auf dem Trägerprofil (4) befestigtes Dichtungsprofil (3) zur Abdichtung der Transportebene gegenüber dem Untergrund,
wobei mit jeder Planke (2) separat oder mit Gruppen von Planken (2) mittels eines Antriebes ein Hub in Längsrichtung ausführbar ist, wobei jede Planke (2) einen Profilquerschnitt mit einem oberen, im Wesentlichen ebenen Abschnitt (5) und einem unteren, gegenüber diesem versetzten, im Wesentlichen U-förmigen Abschnitt (6) aufweist, **dadurch gekennzeichnet, dass** das Dichtungsprofil (3) mit formschlüssig das Trägerprofil hintergreifenden Fügestrukturen (13a, 14a) ausgebildet ist und der ebene Abschnitt (5) der Planke (2) an seinem dem U-förmigen Abschnitt abgewandten Ende einen C-förmigen Fortsatz (21) und der U-förmige Abschnitt (6) der Planke (2) einen in Richtung der Transportebene gerichteten Schenkel (6a) umfasst wobei der C-förmige Fortsatz (21) einer ersten Planke (2) und der in Richtung der Transportebene gerichtete Schenkel (6a) einer zweiten Planke (2) in das Dichtungsprofil (3), vorzugsweise in Form einer Labyrinthdichtung (18) zumindest teilweise dichtend eingreifen.

2. Schubboden-Transportvorrichtung (1) nach Anspruch 1, **dadurch gekennzeichnet, dass** die Labyrinthdichtung (18) im Dichtungsprofil (3) den C-förmigen Fortsatz (21) und den Schenkel (6a) der Planke (2) formschlüssig umgreifen, wodurch eine Führung gebildet ist.

3. Schubboden-Transportvorrichtung (1) nach einem der vorhergehenden Ansprüche, **dadurch gekennzeichnet, dass** das Dichtungsprofil (3)
- einen oberen Gleitabschnitt (9) zur teilweisen Auflage des C-förmigen Abschnitts (21) und einen unteren Abschnitt (10) zur teilweisen Auflage des U-förmigen Abschnitts (6) von zwei benachbarten Planken (2),
- einen Dicht- bzw. Führungsabschnitt (27, 28) zur Abdichtung und Führung des C-förmigen Fortsatzes (21) und des am U-förmigen Abschnitts sich anschließenden Schenkels (6a),
- mindestens einen vorzugsweise zwei Klemmabschnitte (13, 14) zur Befestigung am Trägerprofil (4), und
- mindestens eine Nut (15) zur Positionsfixierung am Trägerprofil (4) umfasst.

4. Schubboden-Transportvorrichtung (1) nach einem der vorhergehenden Ansprüche, **dadurch gekennzeichnet, dass** das Dichtungsprofil (3) einen lasttragenden Gleitabschnitt (8) zur teilweisen Auflage für den ebenen Abschnitt (5) aufweist.

5. Schubboden-Transportvorrichtung (1) nach einem der vorhergehenden Ansprüche, **dadurch gekennzeichnet, dass** das Dichtungsprofil (3) dazu vorgesehen ist, zwei nebeneinander angeordnete Planken (2) zu führen, abzudichten und gleitend zu lagern.

6. Schubboden-Transportvorrichtung (1) nach einem der vorhergehenden Ansprüche, **dadurch gekennzeichnet, dass** der im unteren bodennahen liegende Bereich einer Rinne mit dem U-förmigen Abschnitt (6) breiter als der obere Öffnungsbereich der Rinne mit dem U-förmigen Abschnitt (6) ausgebildet ist wobei vorzugsweise der laterale Flächenbereich des U-förmigen Abschnittes (6) in der Transportebene kleiner als der Flächenbereich des ebenen Abschnitts (5) ausgebildet ist.

7. Schubboden-Transportvorrichtung (1) nach einem der vorhergehenden Ansprüche, **dadurch gekennzeichnet**, das der U-förmige Abschnitt (6) mittels einer Rinnen-Dichtung (23) abdichtbar ist, wobei die Rinnen-Dichtung (23) einseitig im Seitenbereich des U-förmigen Bereichs (6) geführt ist.

8. Schubboden-Transportvorrichtung (1) nach einem der vorhergehenden Ansprüche, **dadurch gekennzeichnet, dass** die Rinnen-Dichtung (23) in Seitenbereichen von zwei benachbarten Planken (2) einseitig befestigt und einseitig gleitend geführt ist.

9. Schubboden-Transportvorrichtung (1) nach einem der vorhergehenden Ansprüche, **dadurch gekennzeichnet, dass** die Rinnen-Dichtung (23) als durchgehende, als unterbrochene und/oder als Öffnungen aufweisende Dichtung (23), beispielsweise mit Bohrungen und/oder Schlitzen ausgebildet ist wobei die Vorrichtung (1) vorzugsweise Mittel zur Ein- und Ausleitung von Gas, Flüssigkeiten und Wärme vorzugsweise in den U-förmigen Abschnitt aufweist.

## Claims

1. Floor conveyor device (1) for transporting different types of freight (7), for example pallets or loose bulk goods, comprising
- at least one support profile (4) for stationary attachment of the conveyor device (1) on a support base,
- a transport surface made up of individual planks (2) to receive and transport the freight (7),
- at least one stationary sealing profile (3) fixed on the support profile (4) to seal the transport surface against the support base,
whereby a travel can be carried cut in longitudinal direction with each plank (2) separately or with groups of planks (2) by means of a drive, whereby each plank (2) has a profile cross-section with an upper, essentially level section (5) and a lower essentially U-shaped section (6), offset from the said section (5), **characterized in that** the sealing profile (3) is designed so that it has joint structures (13a, 14a) engaging flush behind the support profile and the level section (5) of the plank (2) has a C-shaped extension (21) on its end pointing away from the U-shaped section and the U-shaped section (6) of the plank (2) comprises an arm (6a) pointing in the direction of the transport level, whereby the C-shaped extension (21) of a first plank (2) and the arm (6a) of a second plank (2) pointing in the direction of the transport level reach into the sealing profile (3), preferably in the form of a labyrinth seal (18) with an at least partial sealing effect.

2. Floor conveyor device (1) according to claim 1, **characterized in that** the labyrinth seal (18) in the sealing profile (3) encompasses the C-shaped extension (21) and the arm (6a) of the plank (2) in a form-fitting way, forming a guide.

3. Floor conveyor device (1) according to one of the previous claims, **characterized in that** the sealing profile (3) comprises
- an upper sliding section (9) for partial support of the C-shaped section (21) and a lower section (10) for partial support of the U-shaped section (6) of two adjacent planks (2),
- a sealing and guiding section (27, 28) for sealing and guiding of the C-shaped extension (21) and of the arm (6a) joined onto the U-shaped section,
- at least one, preferably twc, clamping sections (13, 14) to attach to the support profile (4), and
- at least one groove (15) to fix the position on the support profile (4).

4. Floor conveyor device (1) according to one of the previous claims, **characterized in that** the sealing profile (3) has a load-bearing sliding section (8) for partial support for the level section (5).

5. Floor conveyor device (1) according to one of the previous claims, **characterized in that** the sealing profile (3) is intended to guide and seal and as a sliding support for two adjacent planks (2).

6. Floor conveyor device (1) according to one of the previous claims, **characterized in that** the area located near the floor of a channeling with the U-shaped section (6) is wider than the upper opening area of the groove with the U-shaped section (6), whereby preferably the lateral surface area cf the U-shaped section (6) in the transport level is smaller than the surface area of the level section (5).

7. Floor conveyor device (1) according to one of the previous claims, **characterized in that** the U-shaped section (6)can be sealed with a channel seal (23), whereby the channel seal (23) is guided on one side in the side area of the U-shaped area (6).

8. Floor conveyor device (1) according to one of the previous claims, **characterized in that** the channel seal (23) is fixed on one side and slides on the other side in the side areas of two adjacent planks (2).

9. Floor conveyor device (1) according to one of the previous claims, **characterized in that** the channel seal (23) is designed as a continuous, as an uninterrupted and/or as a seal with openings (23), for example with holes and/or slots, whereby the system (1) preferably has means to feed gas, liquids and heat in and out, preferably into the U-shaped section.

## Revendications

1. Dispositif de transport à fond mouvant (1) pour le transport de diverses marchandises (7), à titre d'exemple de palettes ou de marchandises en vrac, comprenant :
- au moins un profilé de support (4) pour une fixation fixe du dispositif de transport (1) sur un fond,
- un niveau de transport composé de planches individuelles (2) pour la réception et le transport des marchandises (7),
- au moins un profilé d'étanchéité (3) fixé de manière solidaire sur le profilé de support (4) afin d'étanchéifier le niveau de transport par rapport au fond,
ledit dispositif, au moyen d'un entrainement, rendant possible d'effectuer une levée dans le sens longitudinal de craque planche (2) séparément ou d'un groupe de planches (2), chaque planche (2) présentant une coupe transversale de profilé avec une section supérieure (5) essentiellement plane ainsi qu'une section inférieure (6) décalée par rapport à cette dernière et essentiellement en forme de U, **caractérisé en ce que** le profilé d'étanchéité (3) est conçu avec des structures de raccord (13a, 14a) entrant en prise sur l'arrière du profilé de support par engagement positif et **en ce que** la section plane (5) de la planche (2), sur son extrémité opposée à la section en forme de U, comprend un prolongement en forme de C (21) et la section en forme de U (6) de la planche (2) un montant (6a) orienté dans le sens du niveau de transport, ainsi que le prolongement en forme de C (21) d'une première planche(2) et le montant (6a) orienté dans le sens du niveau de transport d'une seconde planche (2) s'engagent dans le profilé d'étanchéité (3), de préférence sous forme d'un joint labyrinthe (18), en étant hermétique au moins partiellement.

2. Dispositif de transport à fond mouvant (1) selon la revendication 1, **caractérisé en ce que** le joint labyrinthe (18),dans le profilé d'étanchéité (3), prend prise par engagement positif autour du prolongement en forme de C (21) et du montant (6a) de la planche (2), ce qui permet la formation d'un guidage.

3. Dispositif de transport à fond mouvant (1) selon l'une profilé d'étanchéité (3) comprend
- une section coulissante supérieure (9) pour un appui partiel de la section en forme de C (21) et une section inférieure (10) pour un appui partiel de la section en forme de U (6) de deux planches adjacentes (2),
- une section d'étanchéité ou d'entraînement (27, 28) pour l'étanchéification et le guidage du prolongement en forme de C (21) et du montant (6a) se raccordant à la section en forme de U,
- au moins une, de préférence deux sections de serrage (13, 14) servant à la fixation sur le profilé de support (4), et
- comprend au moins une rainure (15) sur le profilé de support (4), ladite rainure servant à la fixation de la position.

4. Dispositif de transport à fond mouvant (1) selon l'une des revendications précédentes, **caractérisé en ce que** le profilé d'étanchéité (3) présente une section coulissante porteuse de charge (8) pour un appui partiel de la section plane (5).

5. Dispositif de Transport à fond mouvant (1) selon l'une des revendications précédentes, **caractérisé en ce que** le profilé d'étanchéité (3) est prévu pour guider, étanchéifier et loger par coulissement deux planches (2) disposées l'une à côté de l'autre.

6. Dispositif de transport à fond mouvant (1) selon l'une des revendications précédentes, **caractérisé en ce que** la zone inférieure - située à proximité du sol- d'une rainure avec la section en forme de U (6) est conçue plus large que la zone d'ouverture supérieure de la rainure avec la section en forme de U (6), et de préférence ladite zone de surface latérale de la section en forme de U (6) au niveau du transport étant conçue plus petite que la zone de surface de la section plane (5).

7. Dispositif de transport à fond mouvant (1) selon l'une des revendications précédentes, **caractérisé en ce que** la section en forme de U (6) peut être étanchéifiée à l'aide d'un joint d'écoulement (23), ledit joint d'écoulement (23) étant guidé sur un côté dans la zone latérale de la zone en ferme de U (6).

8. Dispositif de transport à fond mouvant (1) selon l'une des revendications précédentes, **caractérisé en ce que** le joint d'écoulement (23) est fixé sur un côté dans les zones latérales de deux planches (2) adjacentes et est guidé par coulissement sur un côté.

9. Dispositif de transport à fond mouvant (1) selon l'une des revendications précédentes, **caractérisé en ce que** le joint d'écoulement (23) est conçu sous forme d'un joint (23) continu, sous forme d'un joint discontinu et/ou présentant des ouvertures, à titre d'exemple avec des trous et/ou des entailles, et de préférence ledit dispositif (1) comportant des moyens permettant l'entrée et la sortie de gaz, de liquides et de chaleur, de préférence dans la section en forme de U.
